# EUROPEAN PATENT APPLICATION

(11) **EP 4 488 968 A1**
(43) Date of publication of application: **08.01.2025**
(21) Application number: 24186329.9
(22) Date of filing: 03.07.2024
(51) Int. Cl.: G07C 5/00, G07C 5/08

(54) **METHODS AND VEHICLE UNITS FOR GENERATING DRIVING BEHAVIOR REPORTS**

(30) Priority: 07.07.2023 SE 2350883
(71) Applicant: Stoneridge Electronics AB, 169 73 Solna (SE)
(72) Inventor: WECK, Björn, 169 73 SOLNA (SE); HALLBERG, Sanna, 169 73 SOLNA (SE); ELLINGSSON, Tomas, 191 40 SOLLENTUNA (SE)
(74) Representative: Bergenstråhle & Partners AB

(57) **Abstract**

A method performed by a vehicle unit (10), the vehicle unit (10) is communicatively connected to a network entity (20), the method comprises: obtaining (202) vehicle information data; generating (204) a driving behavior report based on the obtained (202) vehicle information data; transmitting (206) the driving behavior report to the network entity (20).

## Description

### Technical Field

The present disclosure relates generally to methods and vehicle units for generating driving behavior reports.

### Background

Today, transportation by vehicle requires measurement of parameters and information relating to the driver activities. This is not exclusively done to satisfy regulations regarding road transportation, but also for fleet management to measure and increase performance and efficiency, as well as for the purpose of electronic road tolling, monitoring vehicle or engine performance parameters, monitoring data relevant for special transports e.g., dangerous goods, livestock or refrigerated food etc. Therefore, most vehicles, such as lorry trucks, carry a vehicle unit to measure, store and possible also report the collected data. In this document, the term "vehicle unit" shall mean a digital unit capable of gathering information relating to the vehicle. Examples of such information may be a geographical location, driving hours, distance travelled, start time, finish time, rest time, driver name, starting location and finishing location, exhaust measurements, fuel consumption, temperature data from vehicle or cargo sensors, opening and closing of cargo doors or operation of other vehicle systems, e.g., cranes and lifts etc. Such information, in this document also known as vehicle related information data, can further be driving video, driver identity, speed information, position information, time information, environment information, etc. One example of a vehicle unit is a digital tachograph, capable of recording and digitally compiling and storing the vehicle data including driving times and rest periods as well as periods of other work and availability taken by the driver of a heavy vehicle. Under EU legislation it is mandatory to install digital tachographs in vehicles having a mass of more than 3,5 tons. In USA, similar rules exist, relating to an Electronic Logging Device (ELD) with the purpose of recording the driver's duty and vehicle speed in order to ensure the driver is compliant with the driving hours' legislation or the working time directive or similar legislation stipulated by authorities.

The vehicle unit is normally located in the cabin of the vehicle, where the vehicle unit is arranged in the instrument board, so that the vehicle operator may operate the vehicle unit in adjacency to start or stop of a journey. In order to calculate and estimate the speed and the travel distance, or other parameters for instance as listed above, of the vehicle, the vehicle unit is connected to one or more sensors, where the sensors are capable of measuring, for instance, the motion of the wheels or other parameters. For this purpose, a motion sensor is attached to the gearbox of the vehicle to receive pulses, i.e. speed and movement information, which is sent to the tachograph.

Compliance with e.g. driving times and rest periods rules, as well as working rules are checked by relevant authorities. The vehicle information accumulated over a period, is transmitted to an external network entity at regular intervals, typically once a week or once a month. Upon request at an inspection, transport companies shall provide the stored vehicle information to the enforcement authorities e.g., by allowing access to the network entity. Typically, the amount of vehicle information data is large, and all data is downloaded for further analysis. This is a time-consuming procedure. Alternatively, the authorities may request direct access to the vehicle unit upon request for downloading the vehicle information. The entire data file is transmitted and parsed for generation of driving behavior reports and identification of any rule violation or mistake by the enforcement authority. For the transport companies as well, the process of undergoing inspections is time consuming and may take place at inconvenient times during the day or make driving planning difficult. The lack of insight into the vehicle information and compliance with rules, is currently a drawback and risk factor for the transport companies with unforeseeable costs and lack of proactivity and adaptiveness to current driving/vehicle behaviors.

### Summary

It is an object of the invention to address at least some of the problems and issues outlined above. It is an object of embodiments of the invention to check the vehicle behavior in an easier way. It is possible to achieve the object and possibly others by using methods and vehicle units as defined in the attached independent claims.

In a first aspect of the disclosure there is provided a method performed by a vehicle unit, the vehicle unit is communicatively connected to a network entity, the method comprises: obtaining vehicle information data; generating a driving behavior report based on the obtained vehicle information data; transmitting the driving behavior report to the network entity.

According to another embodiment, the generating of the driving behavior report is further based on at least one driving regulation.

According to another embodiment, the method further comprises: encrypting the generated driving behavior report prior to transmitting the driving behavior report to the network entity.

According to another embodiment, the vehicle unit is a tachograph.

The method as claimed in any one of the preceding claims, wherein the generating of the driving behavior report is based on vehicle unit configuration information.

In a second aspect of the disclosure there is provided a vehicle unit, wherein the vehicle unit is communicatively connected to a network entity, the vehicle unit comprises a processing circuitry and a memory, the memory containing instructions executable by the processing circuitry, whereby the vehicle unit is operative for: obtaining vehicle information data; generating a driving behavior report based on the obtained vehicle information data; transmitting the driving behavior report to the network entity.

According to another embodiment, the generating of the driving behavior report is further based on at least one driving regulation.

According to another embodiment, the vehicle unit is further operative for: encrypting the generated driving behavior report prior to transmitting the driving behavior report to the network entity.

According to another embodiment, the vehicle unit is a tachograph.

According to another embodiment, the generating of the driving behavior report is based on vehicle unit configuration information.

In a third aspect of the disclosure there is provided a computer program comprising instructions, which, when executed by a processing circuitry of a vehicle unit, wherein the vehicle unit is communicatively connected to a network entity, causes the vehicle unit to perform the method according to any of the preceding embodiments.

In a fourth aspect of the disclosure there is provided a carrier containing the computer program according to above embodiment, wherein the carrier is one of an electronic signal, an optical signal, a radio signal, an electric signal, or a computer readable storage medium.

In a fifth aspect of the disclosure there is provided a vehicle which comprises at least one vehicle unit according to any one of the preceding embodiments.

### Brief Description of Drawings

The invention is now described, by way of example, with reference to the accompanying drawings, in which:
Fig. 1a and 1b schematically show a vehicle and a vehicle unit, according to possible embodiments.
Fig. 2 schematically shows the method performed by the vehicle unit, according to possible embodiments.
Fig.3 shows a block diagram illustrating the vehicle unit in more detail, according to possible embodiments.

### Detailed Description

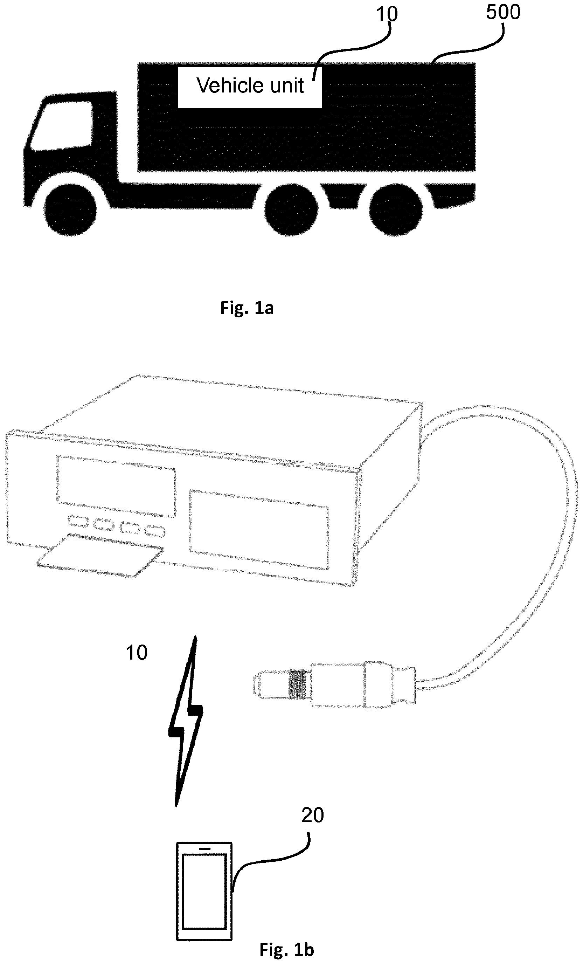

Referring to fig. 1a, a vehicle 500 can be equipped with a vehicle unit 10. The vehicle 500 can be any kind of vehicle, e.g., car, truck, bus, etc. The vehicle unit 10 can be a tachograph and operative for obtaining vehicle information data.

Referring to fig. 1b, the vehicle unit 10 is communicatively connected to a network entity 20, and sends the obtained vehicle information data to the network unit 20, so that another party can access the vehicle information data via the network entity 20. For example, an authority can access the vehicle information data via the network entity 20 and check if the vehicle behavior is proper according to the vehicle information data. However, as discussed in Background, the amount of obtained vehicle information data is enormous, it would be a tough work to check all the vehicle information data and determine the vehicle behavior.

The insight of the invention is that the vehicle unit 10 generates a driving behavior report based on the obtained vehicle information data. The generated driving behavior report can be understood as a summary of the obtained vehicle information data. The vehicle unit 10 transmits the driving behavior report to the network entity 20, so that the authority can check the driving behavior report via the network entity 20, instead of checking large amount of vehicle information data obtained by the vehicle unit 10.

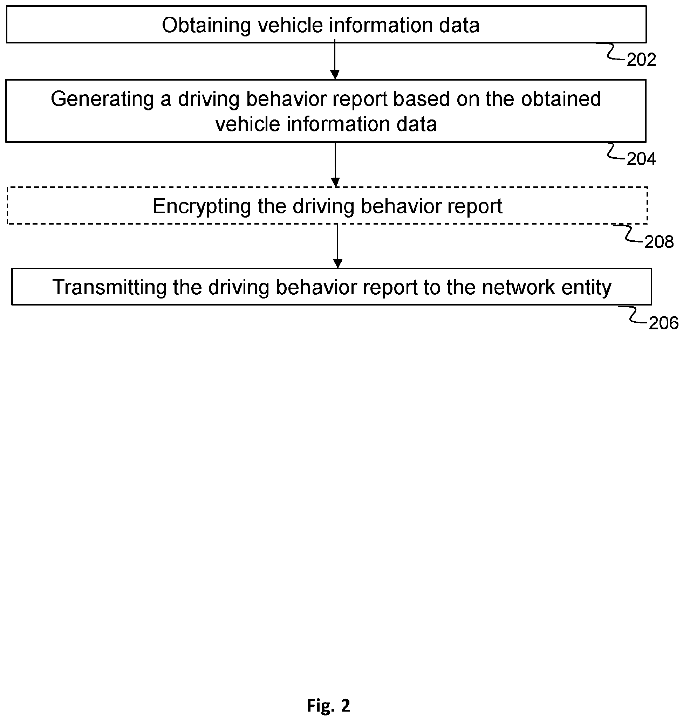

Referring to fig. 2, a method is performed by a vehicle unit10, the vehicle unit 10 is communicatively connected to a network entity 20. The method comprises: obtaining 202 vehicle information data; generating 204 a driving behavior report based on the obtained 202 vehicle information data; transmitting 206 the driving behavior report to the network entity 20.

The network entity 20 may be a network device of any kind of wireless communication network. The network entity 20 may also be a network device of any kind of wired communication network. For example, the network entity 20 can be a user equipment (UE), or a network server, or a cloud device.

In the step 202, the vehicle unit 10 obtains vehicle information data. The vehicle information data can all kinds of vehicle related information, e.g., driving activities, driving video, driver identity, speed information, position information, time information, environment information, etc. The driving activities, driving video and/or driver identity can be obtained by a camera. The speed information can be obtained by all kinds of speed sensors on the vehicle. The position information can be obtained from the vehicle position module 16. The time information can be obtained from vehicle time system or time signal from external system. The environment information can be obtained from environment sensors. The vehicle unit 10 gathers/obtains all the vehicle information data.

In the step 204, the vehicle unit generates a driving behavior report based on the obtained vehicle information data. The driving behavior report can be e.g., a summary of the vehicle information data, which may include driver identity, start and finish time of a trip, distance/route of the trip, average speed of the trip, one or more highlight of the trip, etc. The highlight can be e.g., driving information on traffic accident-prone roads, etc.

In the step 206, the vehicle unit 10 transmits the driving behavior report to the network entity 20. Another party, e.g., an authority, can check the driving behavior report via the network entity 20.

By this embodiment, since a driving behavior report is generated and transmitted to the network entity 20, the authority can check the driving behavior report instead of checking a large amount of raw vehicle information data. The authority can determine if the driving is proper in an easier and more efficient way.

According to another embodiment, the generating 204 of the driving behavior report is further based on at least one driving regulation.

The driving regulation can be driving time regulation and/or working time regulation and/or rest period regulation and/or traffic regulation, e.g., time period allowed for driving, horn ban in certain area, etc. According to one embodiment the driving regulation corresponds to the regulation as defined in Regulation (EC) No 561/2006. The driving behavior report can be generated by comparing the obtained vehicle information data with the driving regulation and checking if the driving of vehicle complies with the driving regulation. Alternatively, a rating can be performed based on the comparison, so that the generated driving behavior report includes the rating. Furthermore, the generating of the driving behavior report can also refer to previous driving behavior report, e.g., if previous vehicle behavior shows that the driver has been driving carefully and complying with driving regulations in the past, the generated driving behavior report can have a higher rate.

By this embodiment, the generated driving behavior report clearly shows if the vehicle behavior complies with driving regulation.

According to another embodiment, the method further comprises: encrypting 208 the generated 204 driving behavior report prior to transmitting 206 the driving behavior report to the network entity 20.

The generated driving behavior report can be encrypted by a key, and the decryption key is sent to the authority which is going to check the driving behavior report via the network entity 20. By this method, only the party with the decryption key is allowed to check the driving behavior report.

According to another embodiment, the vehicle unit 10 is a tachograph.

According to another embodiment, the generating 204 of the driving behavior report is based on vehicle unit 10 configuration information.

The configuration information of the vehicle unit 10 comprises e.g. certain rules for generating the driving behavior report. For example, whether is it allowed for the vehicle unit 10 to generate the driving behavior report, the time frequency of generating and transmitting the driving behavior report (every day, every week, etc.), the condition of generating the driving behavior report (generating the driving behavior report when driving in a specific area; when driving in a specific weather condition, etc.), the data basis for generating the driving behavior report (generating the driving behavior report based on all the vehicle information data, generating the driving behavior report based on a certain part of the vehicle information data).

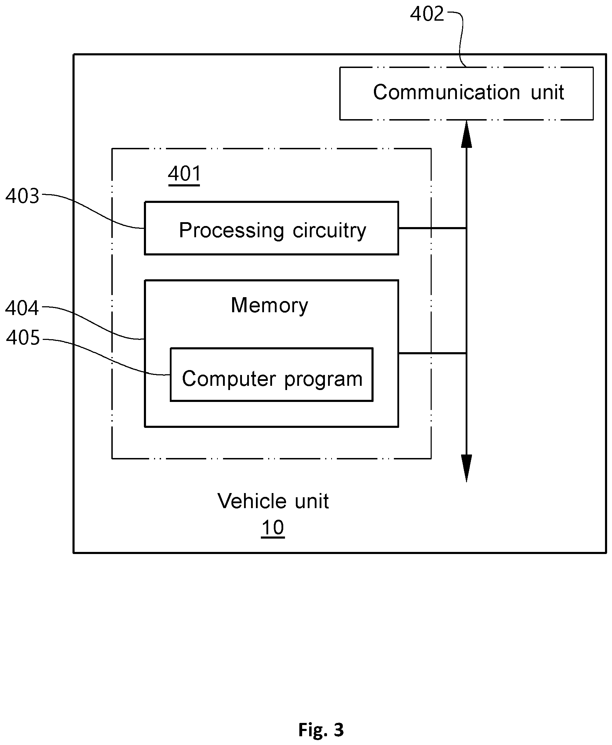

According to another embodiment, referring to fig. 3, a vehicle unit 10 is disclosed. The vehicle unit 10 is communicatively connected to a network entity 20, the vehicle unit 10 comprises a processing circuitry 403 and a memory 404, the memory 404 containing instructions executable by the processing circuitry 403, whereby the vehicle unit 10 is operative for: obtaining vehicle information data; generating a driving behavior report based on the obtained vehicle information data; transmitting the driving behavior report to the network entity 20.

According to another embodiment, the generating of the driving behavior report is further based on at least one driving regulation.

According to another embodiment, the vehicle unit 10 is further operative for: encrypting the generated driving behavior report prior to transmitting the driving behavior report to the network entity 20.

According to another embodiment, the vehicle unit 10 is a tachograph.

According to another embodiment, the generating of the driving behavior report is based on vehicle unit 10 configuration information.

According to another embodiment, a vehicle 500 is provided, which comprises at least one vehicle unit 10 according to any one of the preceding embodiments.

According to other embodiments, referring to fig. 3, the vehicle unit 10 may further comprise a communication unit 402, which may be considered to comprise conventional means for wireless communication with other devices, such as a transceiver for wireless transmission and reception of signals. The instructions executable by said processing circuitry 403 may be arranged as a computer program 405 stored e.g. in said memory 404. The processing circuitry 403 and the memory 404 may be arranged in a sub-arrangement 401. The sub-arrangement 401 may be a micro-processor and adequate software and storage therefore, a Programmable Logic Device, PLD, or other electronic component(s)/processing circuit(s) configured to perform the methods mentioned above. The processing circuitry 403 may comprise one or more programmable processor, application-specific integrated circuits, field programmable gate arrays or combinations of these adapted to execute instructions.

The computer program 405 may be arranged such that when its instructions are run in the processing circuitry, they cause the vehicle unit 10 to perform the steps described in any of the described embodiments of the vehicle unit 10 and its method. The computer program 405 may be carried by a computer program product connectable to the processing circuitry 403. The computer program product may be the memory 404, or at least arranged in the memory. The memory 404 may be realized as for example a RAM (Random-access memory), ROM (Read-Only Memory) or an EEPROM (Electrical Erasable Programmable ROM). In some embodiments, a carrier may contain the computer program 405. The carrier may be one of an electronic signal, an optical signal, an electromagnetic signal, a magnetic signal, an electric signal, a radio signal, a microwave signal, or computer readable storage medium. The computer-readable storage medium may be e.g. a CD, DVD or flash memory, from which the program could be downloaded into the memory 404. Alternatively, the computer program may be stored on a server or any other entity to which the vehicle unit 10 has access via the communication unit 402. The computer program 405 may then be downloaded from the server into the memory 404.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." Further, the term "a number of", such as in "a number of wireless devices" signifies one or more devices. All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a vehicle unit (10), the vehicle unit (10) is communicatively connected to a network entity (20), the method comprises:
obtaining (202) vehicle information data;
generating (204) a driving behavior report based on the obtained (202) vehicle information data;
transmitting (206) the driving behavior report to the network entity (20).

2. The method as claimed in claim 1, the generating (204) of the driving behavior report is further based on at least one driving regulation.

3. The method as claimed in any one of the preceding claims, the method further comprises:
encrypting (208) the generated (204) driving behavior report prior to transmitting (206) the driving behavior report to the network entity (20).

4. The method as claimed in any one of the preceding claims, the vehicle unit (10) is a tachograph.

5. The method as claimed in any one of the preceding claims, wherein the generating (204) of the driving behavior report is based on vehicle unit (10) configuration information.

6. A vehicle unit (10), wherein the vehicle unit (10) is communicatively connected to a network entity (20), the vehicle unit (10) comprises a processing circuitry (403) and a memory (404), the memory (404) containing instructions executable by the processing circuitry (403), whereby the vehicle unit (10) is operative for:
obtaining vehicle information data;
generating a driving behavior report based on the obtained vehicle information data;
transmitting the driving behavior report to the network entity (20).

7. The vehicle unit (10) according to claim 6, the generating of the driving behavior report is further based on at least one driving regulation.

8. The vehicle unit (10) according to any one of claims 6-7, the vehicle unit (10) is further operative for:
encrypting the generated driving behavior report prior to transmitting the driving behavior report to the network entity (20).

9. The vehicle unit (10) according to any one of claims 6-8, the vehicle unit (10) is a tachograph.

10. The vehicle unit (10) according to any one of claims 6-9, the generating of the driving behavior report is based on vehicle unit (10) configuration information.

11. A computer program (405) comprising instructions, which, when executed by a processing circuitry (403) of a vehicle unit (10), wherein the vehicle unit (10) is communicatively connected to a network entity (20), causes the vehicle unit (10) to perform the method according to any of the claims 1-5.

12. A carrier containing the computer program (405) according to claim 11, wherein the carrier is one of an electronic signal, an optical signal, a radio signal, an electric signal, or a computer readable storage medium.

13. A vehicle (500) which comprises at least one vehicle unit (10) according to any one of the claims 6-10.
